# FASCICULE DE BREVET EUROPEEN

(11) **EP 3 615 410 B1**
(45) Date de publication et mention de la délivrance du brevet: **26.04.2023**
(21) Numéro de dépôt: 18719192.9
(22) Date de dépôt: 26.04.2018
(51) Int. Cl.: B63B 11/04, B63B 35/44, B63B 1/10, B63B 39/03, B63B 5/20

(54) **FLOTTEUR SEMI-SUBMERSIBLE NOTAMMENT D'ÉOLIENNE**
HALBTAUCHFÄHIGER SCHWIMMKÖRPER, INSBESONDERE FÜR EINE WINDTURBINE
SEMI-SUBMERSIBLE FLOAT, IN PARTICULAR FOR A WIND TURBINE

(30) Priorité: 27.04.2017 FR 1753697
(43) Date de publication de la demande: 04.03.2020
(73) Titulaire: SAIPEM S.A, 78180 Montigny Le Bretonneux (FR)
(72) Inventeur: CHAPALAIN, Thomas, 75015 Paris (FR); MOIRET, Cyrille, 56600 Lanester (FR); GRIGNOUX, Joël, 29490 Guipavas (FR)
(74) Mandataire: Lavoix
(86) Numéro de dépôt international: PCT/EP2018/060737
(87) Numéro de publication internationale: WO 2018/197615

(56) Documents cités:
- WO-A1-2015/048147
- WO-A1-2016/172149
- US-A- 4 864 958
- US-B1- 7 281 483

## Description

La présente invention concerne un flotteur notamment d'éolienne offshore.

La présente invention concerne en particulier les flotteurs semi-submersibles en acier ou en béton ou encore en acier et en béton également appelés flotteurs hybrides.

De tels flotteurs hybrides sont déjà connus dans l'état de la technique, comme par exemple par le document WO 2014/031009, par le document WO 2016/172149 A1.

Ces documents décrivent un flotteur qui comporte au moins quatre colonnes, dont une colonne centrale, et trois colonnes extérieures, raccordées à la colonne centrale par des branches en forme de ponton.

Dans ces documents, les colonnes extérieures sont reliées à la colonne centrale selon une configuration en étoile.

Les colonnes extérieures et les branches en forme de ponton de ce flotteur comportent alors également des ballasts, permettant de régler le niveau de flottabilité de ce flotteur.

Ceci permet par exemple le transport et l'installation de cette éolienne sur un site de production d'électricité.

Les flotteurs de cette nature dits hybrides utilisent une structure mixte par exemple en acier pour les colonnes et par exemple en béton pour les branches en forme de ponton, entre celles-ci.

Dans les documents antérieurs mentionnés précédemment, des moyens de vidange par pompage de ces ballasts sont également prévus.

Ces moyens de pompage permettent en effet de pomper de l'eau hors de ces ballasts pour modifier la flottabilité de l'ensemble.

Ces documents décrivent donc de façon générale le concept de flotteur semi submersible d'éolienne.

La présente invention a pour but de faire progresser la définition de ce type de flotteurs.

A cet effet l'invention a pour objet un ensemble selon la revendication 1.

L'ensemble selon l'invention peut comprendre les caractéristiques des revendications 2 à 9, prises seules ou en combinaison.

L'invention sera mieux comprise à la lecture de la description qui va suivre, donnée uniquement à titre d'exemple et faite en se référant aux dessins annexés, sur lesquels :
- la figure 1 représente une vue en perspective d'un exemple de réalisation d'un flotteur semi-submersible d'éolienne offshore selon l'invention,
- la figure 2 représente une vue schématique de côté illustrant des ballasts d'un tel flotteur,
- la figure 3 représente une vue partiellement en coupe d'un tel flotteur et illustrant ces ballasts,
- la figure 4 représente de façon schématique un ensemble tel que revendiqué, comprenant notamment un tel flotteur, un navire de soutien, et des moyens de vidange de tels ballasts, et
- la figure 5 illustre la liaison entre des colonnes extérieures et des branches en forme de ponton d'un tel flotteur.

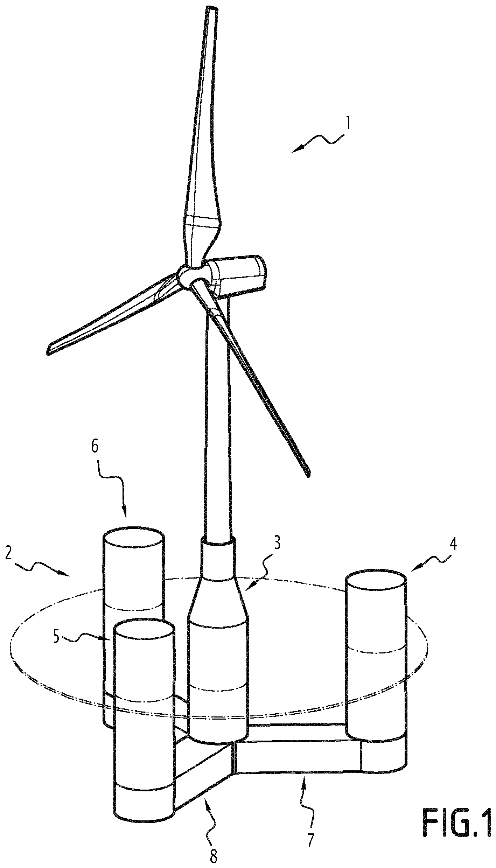

On a en effet illustré sur la figure 1, un flotteur semi-submersible notamment d'éolienne offshore.

Cette éolienne offshore est désignée par la référence générale 1 sur cette figure 1, et le flotteur de celle-ci est désigné par la référence générale 2.

Dans la présente demande, on a illustré un flotteur hybride c'est-à-dire un flotteur utilisant deux matériaux différents pour réaliser des parties de celle-ci.

Ainsi et comme cela a été décrit dans le document antérieur mentionné précédemment, un tel flotteur comporte au moins quatre colonnes par exemple en acier ou en béton, dont une colonne centrale désignée par la référence générale 3 et trois colonnes extérieures désignées par les références 4, 5 et 6.

Ces colonnes extérieures 4, 5 et 6 sont raccordées à la colonne centrale 3, par des branches en forme de ponton en acier ou en béton, dont deux, par exemple 7 et 8, sont illustrées sur cette figure 1.

Comme cela a été indiqué précédemment également, les colonnes centrale et extérieures peuvent être des colonnes en acier ou en béton et présenter une section cylindrique, tandis que les branches en forme de ponton peuvent être réalisées en acier ou en béton et présenter une section rectangulaire.

Dans ce flotteur, les colonnes extérieures et les branches en forme de ponton comportent des ballasts.

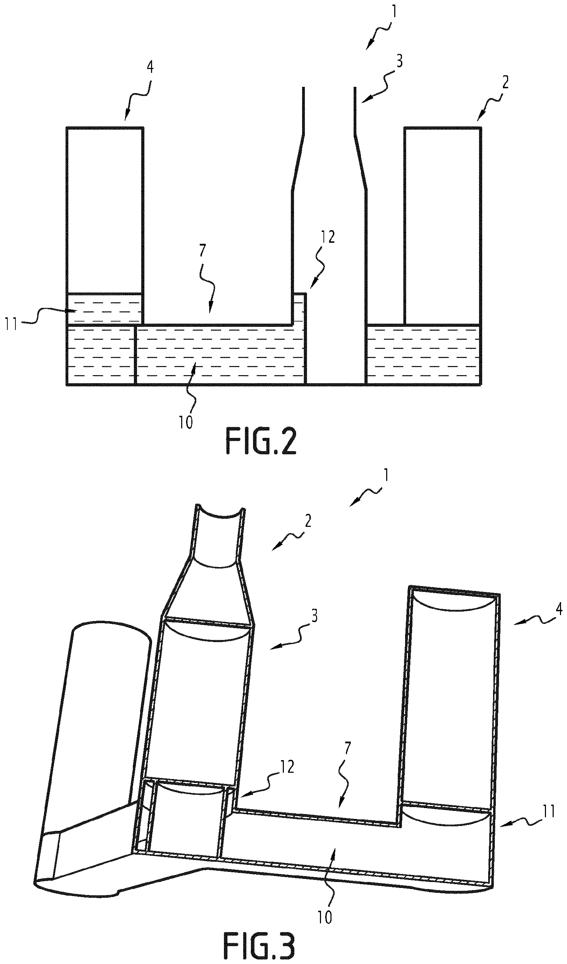

De tels ballasts sont illustrés par exemple sur les figures 2, 3 et 4.

En effet on reconnaît sur ces figures, la colonne centrale 3, une colonne extérieure par exemple 4, et une branche en forme de ponton de liaison de cette colonne extérieure à la colonne centrale, comme par exemple la branche 7.

Comme cela est illustré, les colonnes extérieures et les branches en forme de ponton comportent des ballasts tels que le ballast désigné par la référence générale 10 sur ces figures 2 à 4.

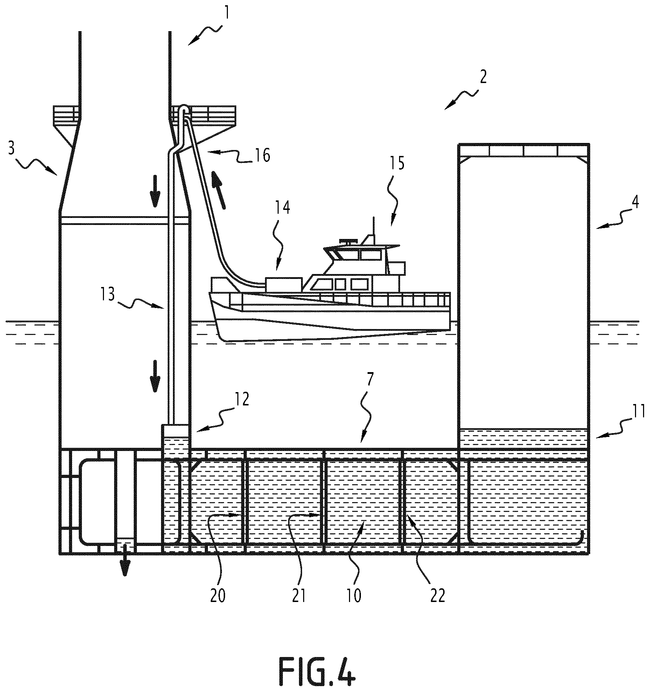

A l'une de leurs extrémités, ces ballasts s'étendent au niveau des colonnes extérieures du flotteur et comportent par exemple comme cela est illustré plus clairement sur la figure 4, une portion qui remonte dans la colonne extérieure correspondante 4, telle que par exemple la portion de ballast désignée par la référence générale 11 sur cette figure 4.

A l'autre de leurs extrémités, ces ballasts comportent par exemple une portion qui s'étend dans la colonne centrale 3, cette portion étant désignée par la référence générale 12 sur ces figures pour le ballast 10.

Ainsi que cela apparaît également sur ces figures, les colonnes peuvent présenter une section cylindrique tandis que les branches en forme de ponton peuvent présenter une section rectangulaire.

Selon l'invention et comme cela est illustré sur la figure 4 en particulier, cette colonne centrale 3 du flotteur comporte également des moyens de raccordement des ballasts à une source d'air comprimé de vidange.

Ainsi dans le flotteur décrit, les ballasts sont des ballasts à remplissage par gravité et à vidange par air comprimé.

On a ainsi représenté sur ces figures et en particulier sur la figure 4, des moyens de raccordement désignés par la référence générale 13 sur cette figure, de la portion de ballast par exemple 12 s'étendant dans la colonne centrale, à une source d'air comprimé de vidange de ces ballasts.

Cette source d'air comprimé est désignée par la référence générale 14 sur cette figure 4.

En fait cette source d'air comprimé peut par exemple comporter des moyens formant compresseur d'air, qui sont selon l'invention portés par un navire de soutien ou analogue, désigné par la référence générale 15 sur cette figure 4, et associés à des moyens de branchement désignés par la référence générale 16, de cette source sur les moyens de raccordement 13 au ballast.

On conçoit en effet que dans un tel flotteur, les ballasts sont raccordés à des conduits ou des canalisations d'air comprimé de vidange, auxquels on peut raccorder un compresseur pour assurer la vidange de ceux-ci.

Des moyens de connexion rapide de type classique sont alors prévus par exemple dans la partie supérieure de la colonne centrale, pour permettre un raccordement de la source aux ballasts.

Le compresseur peut alors être mutualisé entre plusieurs éoliennes par exemple d'un site de production d'électricité.

Le navire de soutien ou analogue peut alors être utilisé pour déplacer ces moyens entre différentes éoliennes par exemple d'un parc afin de réduire les coûts d'installation et d'exploitation de celui-ci.

En effet des moyens de connexion rapide de type classique peuvent être utilisés pour raccorder le compresseur porté par le navire aux canalisations d'air comprimé de vidange des ballasts.

Ces ballasts sont alors des ballasts à remplissage par gravité et vidange par air comprimé comme cela a été mentionné précédemment.

On a également illustré sur la figure 4, le fait que les ballasts comportent par exemple des cloisons de délimitation étanches ou non dans ceux-ci constituant des compartiments de division de ces ballasts.

Par exemple le ballast désigné par la référence générale 10 sur la figure 4, comporte trois cloisons intermédiaires respectivement 20, 21 et 22, permettant de définir différents compartiments dans ceux-ci.

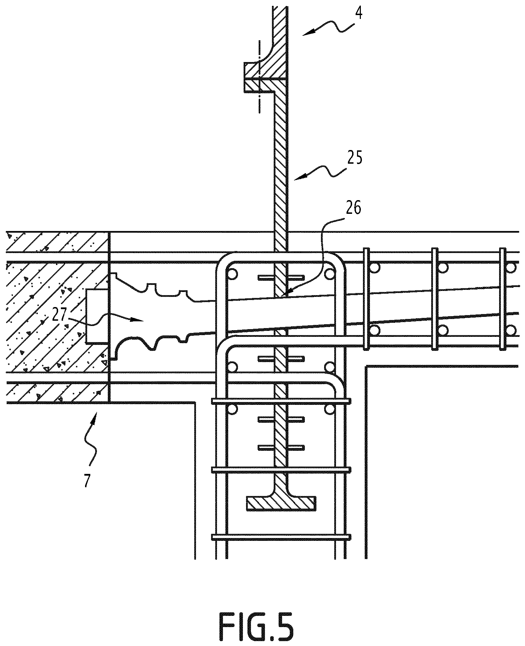

Sur la figure 5, on a illustré un exemple de moyens de liaison entre une branche en forme de ponton par exemple 7 et une colonne extérieure par exemple 4.

Cette liaison peut par exemple être assurée par une bride désignée par la référence générale 25, sur laquelle est fixée d'une façon ou d'une autre par exemple par soudage ou vissage, la colonne en acier 4.

Cette bride comporte des trous par exemple 26, de passage d'organes de post-contrainte 27, dont une partie est noyée dans le béton des branches en forme de ponton 7 par exemple.

Ceci permet alors d'assurer la fixation de la bride qui peut être en acier, sur les branches en forme de ponton, et la fixation par exemple par soudage de la colonne sur cette bride.

Bien entendu d'autres modes de réalisation encore peuvent être envisagés.

Sur la figure 5, on a illustré un exemple de moyens de liaison entre une branche en forme de ponton par exemple 7 et une colonne extérieure par exemple 4.

Cette liaison peut par exemple être assurée par une bride désignée par la référence générale 25, sur laquelle est fixée d'une façon ou d'une autre par exemple par soudage ou vissage, la colonne en acier 4.

Cette bride comporte des trous par exemple 26, de passage d'organes de post-contrainte 27, dont une partie est noyée dans le béton des branches en forme de ponton 7 par exemple.

Ceci permet alors d'assurer la fixation de la bride qui peut être en acier, sur les branches en forme de ponton, et la fixation par exemple par soudage de la colonne sur cette bride.

Bien entendu d'autres modes de réalisation encore peuvent être envisagés.

## Revendications

1. Ensemble comprenant un flotteur semi-submersible (2) notamment d'éolienne offshore (1), comportant au moins quatre colonnes, dont une colonne centrale (3) et trois colonnes extérieures (4, 5, 6) raccordées à la colonne centrale par des branches (7, 8) en forme de ponton, les colonnes extérieures et les branches en forme de ponton comportant des ballasts (10), les ballasts (10) étant des ballasts à vidange par air comprimé,
le flotteur semi-submersible (2) comprenant des moyens de raccordement (13) des ballasts (10) à une source (14) d'air comprimé de vidange,
**caractérisé en ce que** les ballasts (10) sont des ballasts à remplissage par gravité, et
**en ce que** l'ensemble comprend un navire de soutien (15), des moyens de branchement (16) sur les moyens de raccordement (13), et la source (14) d'air comprimé de vidange fournissant l'air comprimé de vidange aux ballasts (10), la source (14) d'air comprimé de vidange étant portée par le navire de soutien (15) et étant associée aux moyens de branchement (16).

2. Ensemble selon la revendication 1, **caractérisé en ce que** les ballasts (10) des branches comportent une portion (12) s'étendant dans la colonne centrale (3).

3. Ensemble selon la revendication 1 ou 2, **caractérisé en ce que** la source d'air comprimé comporte des moyens formant compresseur d'air (14).

4. Ensemble selon l'une quelconque des revendications précédentes, **caractérisé en ce que** les moyens de raccordement (13) comprennent des conduits de raccordement s'étendant dans la colonne centrale (3) entre la portion (12) des ballasts (10) s'étendant dans la colonne centrale et des moyens de connexion à la source d'air comprimé (14), prévus dans la partie supérieure de cette colonne centrale.

5. Ensemble selon l'une quelconque des revendications précédentes, **caractérisé en ce que** les ballasts (10) comportent une portion (11) qui remonte dans les colonnes extérieures (4, 5, 6).

6. Ensemble selon l'une quelconque des revendications précédentes, **caractérisé en ce que** les colonnes présentent une section cylindrique.

7. Ensemble selon l'une quelconque des revendications précédentes, **caractérisé en ce que** les branches en forme de ponton présentent une section rectangulaire.

8. Ensemble selon l'une quelconque des revendications précédentes, **caractérisé en ce que** les branches (7, 8) en forme de ponton comportent des cloisons (20, 21, 22) de délimitation de compartiments dans les portions de ballasts correspondantes.

9. Ensemble selon l'une quelconque des revendications précédentes, **caractérisé en ce que** les colonnes (4) sont en acier et les branches en béton et **en ce que** les colonnes sont reliées aux branches (7) par des brides de fixation (25) associées à des organes (27) de post-contrainte noyés dans le béton des branches en forme de ponton.

## Patentansprüche

1. Anordnung, umfassend einen halbtauchfähigen Schwimmkörper (2), insbesondere einer Offshore-Windkraftanlage (1), umfassend mindestens vier Säulen, darunter eine mittlere Säule (3) und drei äußere Säulen (4, 5, 6), die über pontonförmige Zweige (7, 8) mit der mittleren Säule verbunden sind, die äußeren Säulen und die pontonförmigen Zweige umfassend Ballasttanks (10), wobei die Ballasttanks (10) durch Druckluft entleerbare Ballasttanks sind,
der halbtauchfähige Schwimmkörper (2) umfassend Einrichtungen (13) zum Anschließen der Ballasttanks (10) an eine Quelle (14) für Entleerungsdruckluft,
**dadurch gekennzeichnet, dass** die Ballasttanks (10) durch Schwerkraft befüllbare Ballasttanks sind, und
dass die Anordnung ein Stützschiff (15), Abzweigungseinrichtungen (16) an den Verbindungseinrichtungen (13) und die Quelle (14) für Entleerungsdruckluft umfasst, die die Entleerungsdruckluft an die Ballasttanks (10) bereitstellt, wobei die Quelle (14) für Entleerungsdruckluft von dem Stützschiff (15) getragen wird und mit den Abzweigungseinrichtungen (16) assoziiert ist.

2. Anordnung nach Anspruch 1, **dadurch gekennzeichnet, dass** die Ballasttanks (10) der Zweige einen Abschnitt (12) aufweisen, der sich in die mittlere Säule (3) erstreckt.

3. Anordnung nach Anspruch 1 oder 2, **dadurch gekennzeichnet, dass** die Druckluftquelle Einrichtungen umfasst, die einen Luftkompressor (14) bilden.

4. Anordnung nach einem der vorherigen Ansprüche, **dadurch gekennzeichnet, dass** die Verbindungseinrichtungen (13) Verbindungsleitungen umfassen, die sich in der mittleren Säule (3) zwischen dem Abschnitt (12) der Ballasttanks (10), der sich in die mittlere Säule erstreckt, und den Einrichtungen zum Anschließen an die Druckluftquelle (14), die in dem oberen Abschnitt dieser mittleren Säule bereitgestellt sind, erstrecken.

5. Anordnung nach einem der vorherigen Ansprüche, **dadurch gekennzeichnet, dass** die Ballasttanks (10) einen Abschnitt (11) aufweisen, der in den äußeren Säulen (4, 5, 6) nach oben steigt.

6. Anordnung nach einem der vorherigen Ansprüche, **dadurch gekennzeichnet, dass** die Säulen einen zylindrischen Querschnitt aufweisen.

7. Anordnung nach einem der vorherigen Ansprüche, **dadurch gekennzeichnet, dass** die pontonförmigen Zweige einen rechteckigen Querschnitt aufweisen.

8. Anordnung nach einem der vorherigen Ansprüche, **dadurch gekennzeichnet, dass** die pontonförmigen Zweige (7, 8) Schotten (20, 21, 22) zur Begrenzung von Abteilen in den entsprechenden Ballastabschnitten umfassen.

9. Anordnung nach einem der vorherigen Ansprüche, **dadurch gekennzeichnet, dass** die Säulen (4) aus Stahl und die Zweige aus Beton bestehen und dass die Säulen durch Befestigungsflansche (25), die mit Nachspannorganen (27) verbunden sind, die in den Beton der pontonförmigen Zweige eingebettet sind mit den Zweigen (7) verbunden sind.

## Claims

1. Assembly comprising a semi-submersible float (2), in particular for an offshore wind turbine (1), comprising at least four columns, including a central column (3) and three outer columns (4, 5, 6) connected to the central column by pontoon-shaped branches (7, 8), the outer columns and the pontoon-shaped branches comprising ballasts (10), the ballasts (10) being ballasts with compressed-air drainage,
the semi-submersible float (2) comprising means for connecting (13) the ballasts (10) to a source (14) of compressed discharge air,
**characterised in that** the ballasts (10) are gravity-filled ballasts, and
**in that** the assembly comprises a support vessel (15), connection means (16) to the connection means (13), and the source (14) of compressed discharge air supplying the compressed discharge air to the ballast tanks (10), the source (14) of compressed discharge air being carried by the support vessel (15) and being associated with the connection means (16).

2. An assembly according to claim 1, **characterised in that** the ballasts (10) of the branches comprise a portion (12) extending into the central column (3).

3. An assembly as claimed in claim 1 or 2, **characterised in that** the source of compressed air comprises air compressor means (14).

4. Assembly according to any of the preceding claims, **characterised in that** the connection means (13) comprise connection ducts extending in the central column (3) between the portion (12) of the ballasts (10) extending in the central column and means of connection to the source of compressed air (14), provided in the upper part of this central column.

5. An assembly according to any of the preceding claims, **characterised in that** the ballasts (10) comprise a portion (11) which rises in the outer columns (4, 5, 6).

6. Assembly according to any of the preceding claims, **characterised in that** the columns have a cylindrical section.

7. Assembly according to any of the preceding claims, **characterised in that** the pontoon-shaped branches have a rectangular cross-section.

8. Assembly according to any of the preceding claims, **characterised in that** the pontoon-shaped branches (7, 8) comprise partitions (20, 21, 22) for delimiting compartments in the corresponding ballast portions.

9. Assembly according to any one of the preceding claims, **characterised in that** the columns (4) are made of steel and the branches are made of concrete and **in that** the columns are connected to the branches (7) by fixing flanges (25) associated with post-tensioning members (27) embedded in the concrete of the pontoon-shaped branches.
